# EUROPEAN PATENT SPECIFICATION

(11) **EP 2 139 633 B1**
(45) Date of publication and mention of the grant of the patent: **31.05.2017**
(21) Application number: 08751438.6
(22) Date of filing: 20.03.2008
(51) Int. Cl.: B23C 5/20, B23C 5/22

(54) **CUTTING INSERT FOR A MILLING CUTTER**
SCHNEIDEINSATZ FÜR EINEN FRÄSER
PLAQUETTE DE COUPE POUR FRAISE

(30) Priority: 26.04.2007 IN CH08862007
(43) Date of publication of application: 06.01.2010
(73) Proprietor: Taegu TEC India P.LTD., Bangalore 560 099 (IN)
(72) Inventor: BHAGATH, Kedar, Suresh, Bangalore 560 076 (IN)
(74) Representative: Vossius & Partner Patentanwälte Rechtsanwälte mbB
(86) International application number: PCT/IN2008/000170
(87) International publication number: WO 2008/132757

(56) References cited:
- EP-A1- 0 587 109
- EP-A1- 0 672 492
- WO-A1-96/35538
- GB-A- 2 213 408
- GB-A- 2 298 600
- US-A- 5 720 583
- US-A1- 2002 090 272
- US-A1- 2006 210 364
- US-A1- 2007 003 384

## Description

### FIELD OF THE INVENTION

The current invention relates to a cutting insert according to the preamble of claim 1, of the sort used in milling cutters. More particularly, it concerns a cutting insert having a square foot print and capable of forming a 90° cut in a work piece.

### BACKGROUND OF THE INVENTION

There are numerous metal cutting applications requiring that a 90° shoulder be cut in a work piece. To make a 90° shoulder, a cutting insert seated in a tool preferably employs an operative primary cutting edge in conjunction with a wiper (sometimes referred to as a "secondary" cutting edge) to which it is connected via a corner. Such a cutting insert needs the following clearances with respect to the tool: a primary cutting edge relief angle, a wiper relief angle, and relief between any non-operative cutting edges at the work piece.

U.S. Patent No. 6,336,776, which discloses a cutting insert according to the preamble of claim 1, discloses a fully indexable negative geometry polygonal insert for machining a square (or 90°) corner, in a work piece. The disclosed insert uses an operative primary cutting edge extending in a first direction from each corner of the polygon downwardly from an associated major polygonal surface of the insert along with a wiper lying substantially in the plane of the associated major surface and extending in a second direction from the insert corner. Instead of being directly connected to the insert corner, the wiper is spaced apart from the insert corner by a transitional cutting edge.

The geometry of the primary cutting edge enables mounting of the insert to a milling cutter with negative axial rake, such that the primary cutting edge is substantially parallel to an axis of rotation of the cutting tool. The wiper laying on the major surface does not have a positive rake face associated with it. Thus, when the insert is seated to provide the primary cutting edge with negative axial rake and negative radial rake, an acute angle is formed between the wiper and the work piece, resulting in a double negative cutting geometry, which may adversely impact surface finish.

Also, when the insert is positioned on the tool primary cutting edge is parallel to the axis of rotation, i.e. the axial angle is zero. This exerts a high load on cutting because the entire-cutting edge experiences the material all at once, and there is no gradual entry of the cutting edge in the material.

### SUMMARY OF THE INVENTION

In one aspect, the present invention is directed to a double-ended indexable cutting insert according to claim 1, comprising: first and second substantially square end surface facing opposite directions, each end surface having an associated abutment surface and four associated insert corners; four side surfaces connecting the first and second end surfaces to form a total of eight edges, each edge comprising a primary cutting edge, a wiper and a transitive edge connecting the primary cutting edge to the wiper, at least the primary cutting edge and the wiper occupying a common plane; a median plane M located mid-way between the first and second end surfaces and passing through the four side surfaces, wherein: each insert corner has associated therewith: a primary cutting edge extending from said each insert corner in a downward direction towards the median plane M; and a wiper extending from said each insert corner in an upward direction away from the median plane M, said wiper rising above an associated abutment surface.

A leading portion of the primary cutting edge which is closed to the insert corner may rise above the associated abutment surface.

In a side view of the cutting insert, the primary cutting edge may slop from a first insert corner towards the median plane M and form an angle α therewith, while the wiper may slope from a second insert corner away from the median plane M and form an angle β therewith, α/β. Typically the angle α ≥ β. In one embodiment, the angle α is between 6° and 12°, and the angle β is between 0° and 6°.

Each end surface may comprise a peripheral groove fully encircling the abutment surface, the peripheral groove having an outer portion which slopes downwardly from a nearest edge, and an inner portion which rises towards the abutment surface.

The abutment surface may comprise a plurality of projecting abutment pads. At least a leading portion of the primary cutting edges and the wipers may rise above the projecting abutment pads. The projecting abutment pads is at a height H1 above the median plane M, a high point of the wipers is at a height H2 above the projecting abutment pads; and a ratio of H2/H1 may be between 0.25 - 0.5.

In a side view of the cutting insert, the primary cutting edge may extend from its associated insert corner and along its associated side surface sufficiently far to provide a depth of cut of L1, which is between 0.5 - 0.7 times the length L of its associated side surface; and the wiper may extend from its associated insert corner and along its associated side surface for a distance of L2, which is between 0.1 - 0.2 times the length L of its associated side surface.

The cutting insert may further comprise a throughbore passing between the first and second end surfaces and through the median plane.

A sidewall of the throughbore is provided with a plurality of sets of contact surfaces, the contact surfaces of a first set intersecting a first plane and the contact surfaces of a second set intersecting a second plane which iis spaced apart from the first plane, the first and second planes both being parallel to the median plane, and located on opposite sides of the median plane.

The contact surfaces of the first set and the second set are configured relative to one another such that a clamping screw inserted at a non-zero angle relative to a through bore axis abuts at least one contact surface from each set.

In another aspect, the present invention is directed to a milling cutter according to claim 15, having an axis of rotation R and comprising: a cutter body having a front face connecting to a peripheral surface and at least one insert pocket opening out to both the front face and the peripheral surface, with a double-ended indexable cutting insert of the sort described above seated in the at least one insert pocket.

When seated in the milling cutter, the cutting insert may have an overall negative axial relief angle for providing axial clearance and an overall negative radial relief angle for providing radial clearance.

When seated in the milling cutter, an operative primary cutting edge of the cutting insert may have a positive axial angle while an operative wiper may have a negative radial angle.

In the milling cutter, the insert pocket may have a pocket base which slopes downwardly in the axial direction towards the front face, and slopes downwardly in the radial direction towards the peripheral surface.

The insert pocket may comprise spaced apart first and second radial abutment surfaces and an axial abutment surface which together provide three-point contact with adjacent non-operative sides of the cutting insert.

The insert pocket may have a pocket base provided with a clamping bore which is inclined at a predetermined non-zero angle relative to a normal to the pocket base; and a clamping screw passing through a through bore of the cutting insert and occupying the clamping bore applies a clamping force at least partially in a direction of a far corner of the insert pocket.

In the milling cutter, the cutting insert is preferably seated in the at least one insert pocket such that an operative primary cutting edge and an operative wiper are arranged to cut a true 90° shoulder in a work piece, while still providing clearance for a non-operative primary cutting edge lying on the same plane as the operative wiper.

### BRIEF DESCRIPTION OF THE DRAWINGS

For a better understanding of the present invention and to show how the same may be carried out in practice, reference will now be made to the accompanying drawings, in which:
Fig. 1 shows a perspective view of a cutting insert in accordance with one embodiment the present invention.
Fig. 2 shows a side view of the cutting insert of Fig. 1.
Fig. 3 shows an end view of the cutting insert of Fig. 1.
Fig. 4 shows a section view of the cutting insert taken along line IV-IV in Fig. 3.
Fig. 5 shows a section view of the cutting insert taken along line V-V in Fig. 3.
Fig. 6 shows a section view of the cutting insert taken along line VI-VI in Fig. 3.
Fig. 7 shows a perspective view of a cutting tool having the cutting insert of Fig. 1 seated therein.
Fig. 8 shows an enlarged perspective view of the seated insert in the cutting tool of Fig. 7.
Fig. 9 shows an exploded view of the cutting tool of Fig.7.
Fig. 10 shows a side view of the cutting tool of Fig. 7.
Fig. 11 shows a face view of the cutting tool of Fig. 7.
Fig. 12 shows ana end view of the cutting insert seated in the cutting tool of Fig. 7.
Fig. 13 shows a section view taken along line XIII-XIII in Fig. 12.

### DETAILED DESCRIPTION OF PREFERRED EMBODIMENTS

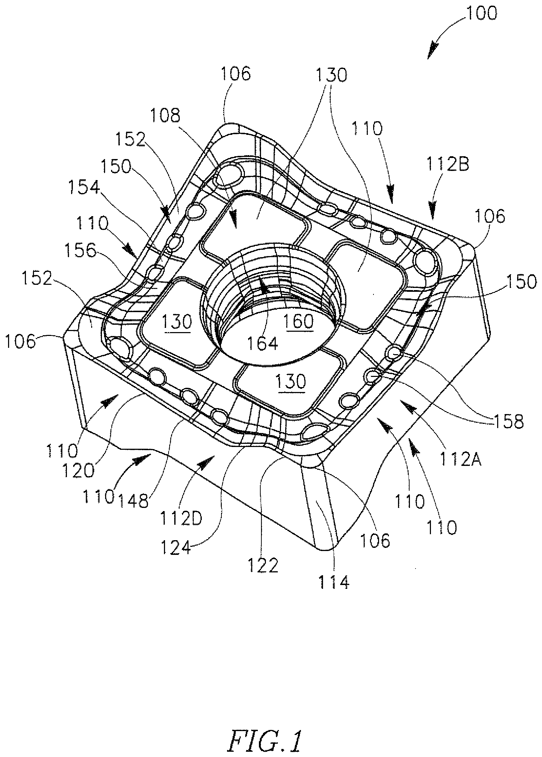

Figs. 1-5 show one embodiment of a cutting insert 100 in accordance with the present invention. Cutting insert 100 is preferably formed from carbide or other material by pressing and sintering, injection molding, or other known manner.

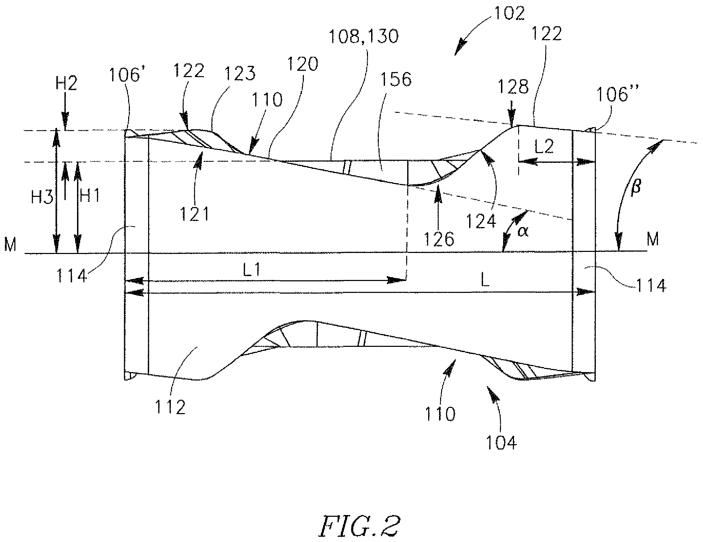

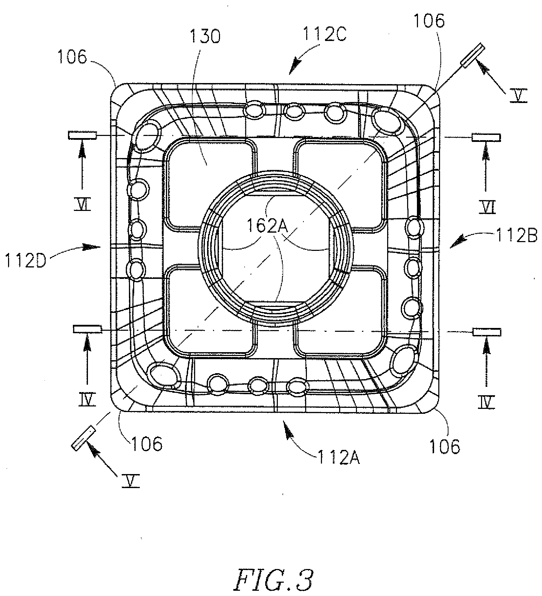

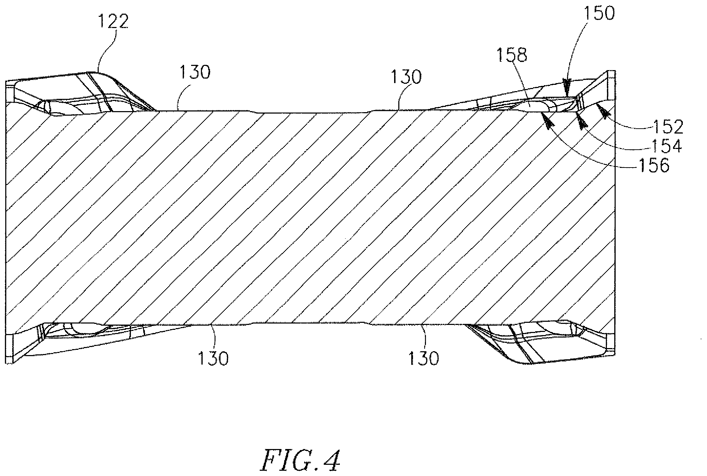

Cutting insert 100 is a double-ended (i.e.reversible) with each end being four-way indexable, providing a total of eight cutting positions. The insert's first end surface 102 and second end surface 104 face in opposite directions and are substantially square in an end view (see Fig. 3). Each end surface is provided with an associated abutment surface 108 in a central region thereof, and four associated insert corners 106. As seen in Figs. 2 and 4, the insert corners 106 do not form the high points, in a side view of the cutting insert.

The cutting insert 100 has four side surfades 112A, 112B, 112C, 112D, adjacent pairs of which are connected at corner surfaces 114. The four side surfaces 112A, 112B, 112C, 112D connect the first end surface 102 to the second end surface 104. An edge 110 is formed at the intersection of each side surface with each end surface, giving the insert a total of eight such edges 110. The edge 110 is provided with a narrow land 148 for strength. Each edge 110 comprises a primary cutting edge 120, a wiper 122 and a transitive edge 124 connecting the primary cutting edge 120 to the wiper 122. The transitive edge 124 may include a first curved portion 126 proximate the primary cutting edge 120 and a second curved portion 128 proximate the wiper 122. As best seen in Fig. 3, the primary cutting edge 120 and the wiper 122 occupy a common plane, in an end view of the cutting insert.

As seen in Fig. 2, the cutting insert has a median plane M which is located mid-way between the first and second end surfaces, 102, 104 and passes substantially perpendicularly through the four side surfaces.

Each insert corner 106 has an associated primary cutting edge 120 and an associated wiper 122.

The associated primary cutting edge 120 extends from the insert corner 106 in a downward direction towards the median plane M, along its associated side surface 112. A leading portion 121 of the primary cutting edge 120 which is closest to the insert corner 106', is above the abutment surface 108 of the associated end surface 102 (see Fig.2). In one embodiment, the primary cutting edge 120 extends from its associated insert corner 106' along its associated side surface 112 sufficiently far to provide a depth of cut of L1 which is between 0.5-0.7 times the length L of its associated side surface112. Meanwhile, the wiper edge 122 extends from its associated insert corner106" along its associated side surface for a distance of L2, which is between 0.1 - 0.2 times the length L of its associated side surface 112.

The associated wiper 122 extends from the insert corner 106 in an upward direction away from the median plane M, and rises above an associated abutment surface 108. Unlike the wiper seen in U.S. Patent No. 6,336,776, wiper 122 begins at the insert corner 106 instead of being spaced apart therefrom., The wiper 122 may be straight (as shown), or may instead comprise an arc which extends upwardly from the insert corner 106. The wiper 122 may further be provided with slight downward tapering (a "dishing angle") at its far end to ensure that the end does not touch a work piece.

In a side view of the cutting insert (see Fig. 2), the primary cutting edge 120 slopes downwardly from one insert corner 106 towards the median plane M and forms an an angle α therewith. Meanwhile, the wiper 122 slopes upwardly from an adjacent insert corner 106" away from the median plane M and forms an angle p therewith. In general, α ≠ p. In some embodiments α ≥ p. Generally speaking, the angle α may be between 6° and 12° while the angle p may be between 0° and 6°.

In one embodiment, the abutment surface 108 comprises a plurality of projecting abutment pads 130 (see Figs. 1 and 4), which are coplanar with one another, and parallel to the median plane M. It is understood, however, that in other embodiments, the abutment pads need not be either planar or coplanar with one another, and need not be parallel to the median plane M. The leading portion 121 of the primary cutting edge 120 and the wipers 122 are above the abutment pads 130, facilitating chip flow. As seen in the embodiment depicted in Fig, 2, the abutment surface 108 and the projecting abutment pads 130 are at a height H1 above the median plane M. Meanwhile, the high point 123 of the wiper 122 is at a height H2 above the abutment surface 108, or a height H3 =H1 + H2 above the median plane M. The actual values of H1, H2 and H3 will vary depending on the specific insert design. However, in typical embodiments, the ratio of H2/H1 is between 0.25 -0.5

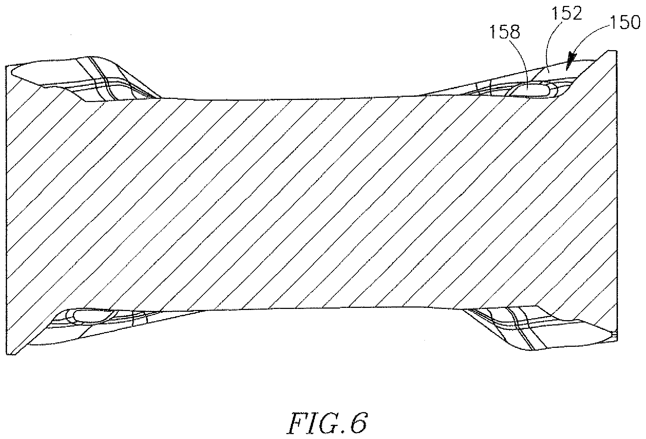

Returning to Fig. 1, each end surface has a peripheral groove 150 fully encircling the abutment surface 108. The peripheral groove 150 has an outer portion 152 which slopes downwardly from a nearest edge 110 to a base portion 154, and an inner portion 156 which rises from the base portion 154 towards the abutment surface 108 and abutment pads 130. Chip forming structures 158 are provided on the base portion 154 to help curl chips and control their flow so as to prevent damage to the abutment pads 130 during a cutting operation (see Figs.4-6).

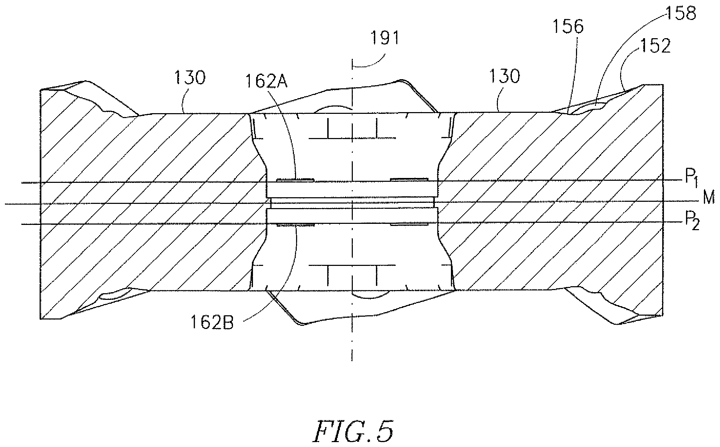

A throughborre 160 passes between the first and second end surfaces 102, 104 and through the median plane M. The throughbore 160 is configured to receive a clamping screw to secure the cutting insert 100 in an insert pocket of a tool. The sidewall 164 of the throughbore 160 is provided with formations 162A, 162B which allows a clamping screw to be accommodated therein, in a plurality of orientations. In one embodiment, the formations comprise eight arcuate contact surfaces 162A, 162B divided into two sets, each set comprising four surfaces, the surfaces of a given set being intersected by a common imaginary plane. As seen in Fig. 5, the two imaginary planes P1, P2 are parallel to each other and also to the median plane M, and are located on opposite sides of the median plane M.

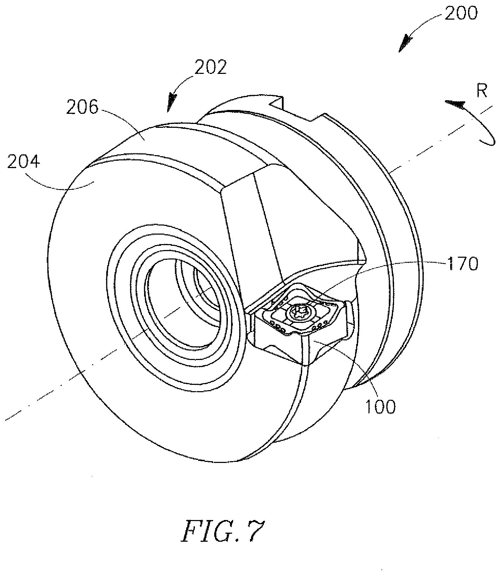

Fig. 7 shows a milling cutter 200 in accordance with one embodiment of the present invention. The milling cutter 200 includes a cutter body 202 having an axis of rotation R and a front face 204 connecting to a cylindrical peripheral surface 206. Formed in the cutter body 202 is at least one insert pocket 208 that opens out to both the front face 204 and the peripheral surface 206. A double-ended indexable cutting insesrt 100 of the sort described above is seated in the insert pocket 208 and retained therein by a clamping screw 170.

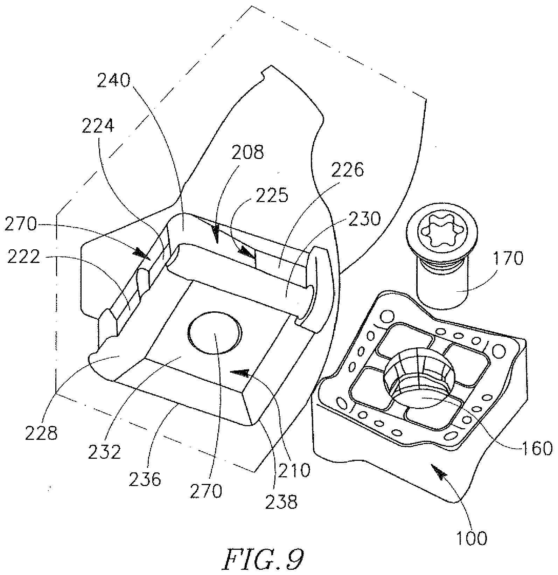

As seen in Fig. 9, the insert pocket 208 includes a pocket base 210 generally facing in the direction of rotation R, a generally radially facing side wall 220 comprising spaced apart first 222 and second 224 radial abutment surfaces, and a generally axially facing side wall 225 comprising an axial abutmement surface 226. Together, the abutment surfaces 222, 224 and 226 provide three-point contact with adjacent non-operative sides of the cutting insert 100.

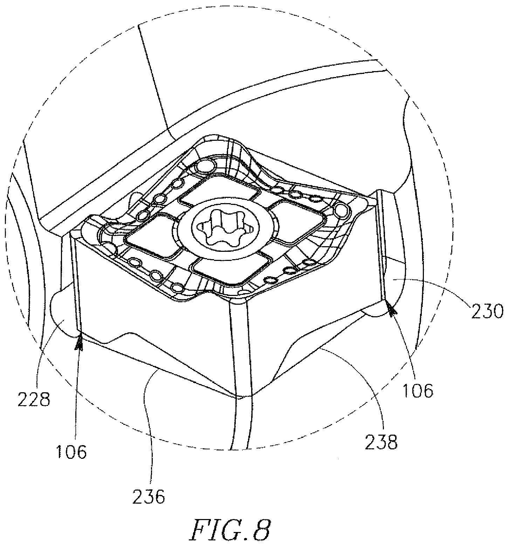

An axially directed relief channel 228 connects the radially facing side wall 220 to the pocket base 210, while a radially directed relief chananel 230 connects the axially facing side wall 225 to the pocket base 210, the relief channels 228, 230 merging near a far corner 240 of the insert pocket 208. The pocket base 210 comprises a clamping bore 270 and a raised surface 232 which is elevated relative to the insert pocket's lower axial edge 236 and lower radial edge 238. When the cutting insert 100 is seated in the insert pocket 208, the insert's abutment pads 130 rest upon the raised surface 232, while the relief channels 228, 230 accommodate corners 106 of the non-operative end surface ( See Fig. 8).

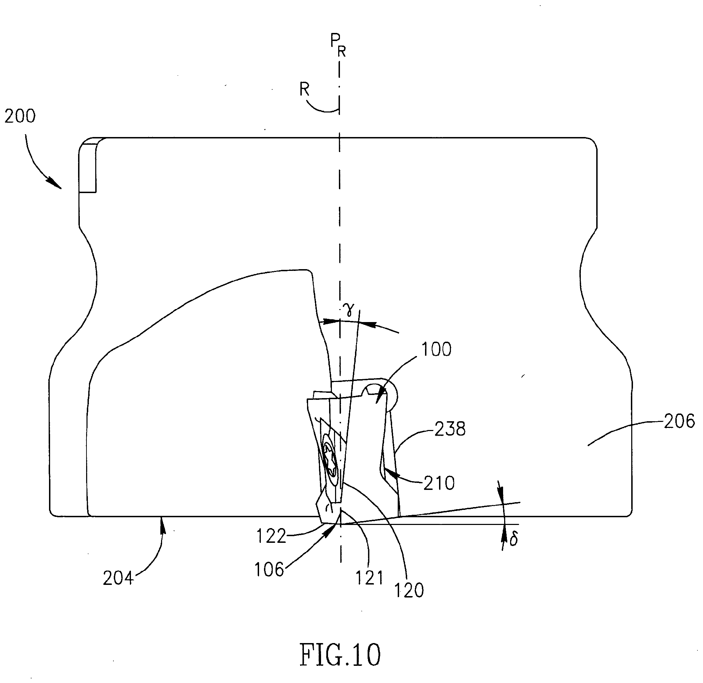

Fig. 10 shows a side view of the tool 200 oriented such that a reference plane P_{R} (perpendicular to the page) contains the axis of rotation R and passes through the operative insert corner 106 of the cutting insert 100. In this orientation, it can be seen that the operative primary cutting edge 120 has a positive axial angle γ (or positive helix), allowing for gradual entry of primary cutting edge 120 into a work piece, commencing with its leading portion 121. It can further be seen in this figure that the double ended cutting insert 100 has a negative axial relief angle δ which provides axial clearance for the operative wiper 122. As also seen in this figure; the pocket base 210 slopes downwardly in the axial direction towards the front face 204.

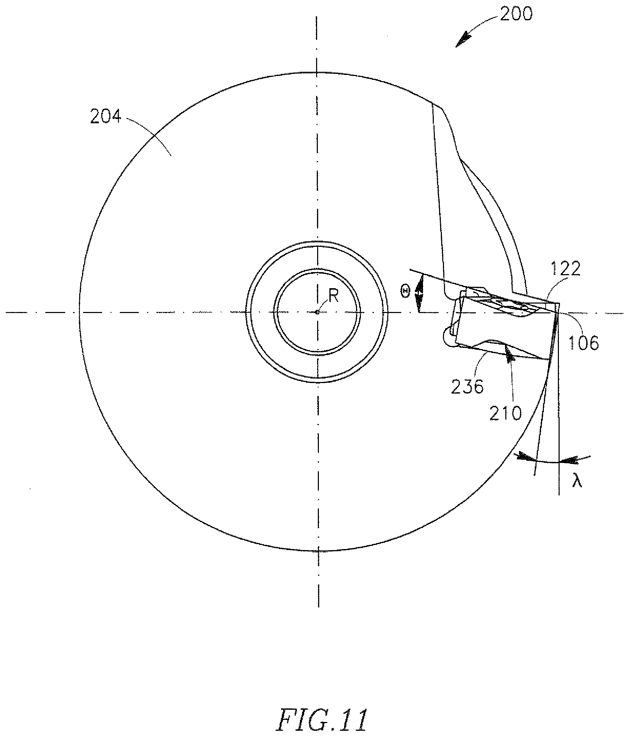

Fig. 11 shows an end view of the tool 200 in the same orientation with reference plane P_{R} again passing through the operative insert corner. It can be seen from this figure that the operative wiper 122 has a negative radial angle θ (or negative helix) while the cutting insert 100 maintains a negative radial angle λ which provides radial clearance for the operative primary cutting edge 120. As also seen in this figure; the pocket base 210 slopes downwardly in the radial direction towards the peripheral face 206.

The arrangement seen in Figs. 10 and 11 potentially provides the cutting tool 200 with a number of characteristics. First, the insert 100 is seated on the total 200 in such a way that the primary cutting edge 120, from the insert corner 106 to the transitive edge 124, lies on a constant radius of rotation as the axis of rotation R. This coupled with the insert's negative axial angle δ and negative radial angle λ ,helps ensure a true 90° cut in a work piece up to the length of the primary cutting edge 120. Furthermore, the operative wiper 122, with its negative helix, becomes parallel to the surface of the work piece during a cutting operation, promoting an even and smooth surface. In this orientation, there is a clearance between the non-operative cutting edge lying on the plane of the operative wiper 122 and the work piece, thus ensuring that the operative wiper 122 is the only portion of the insert responsible for finishing the face of the work piece.

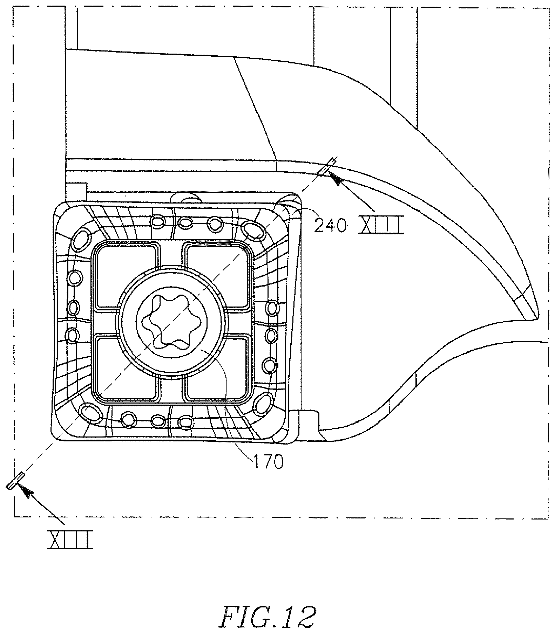

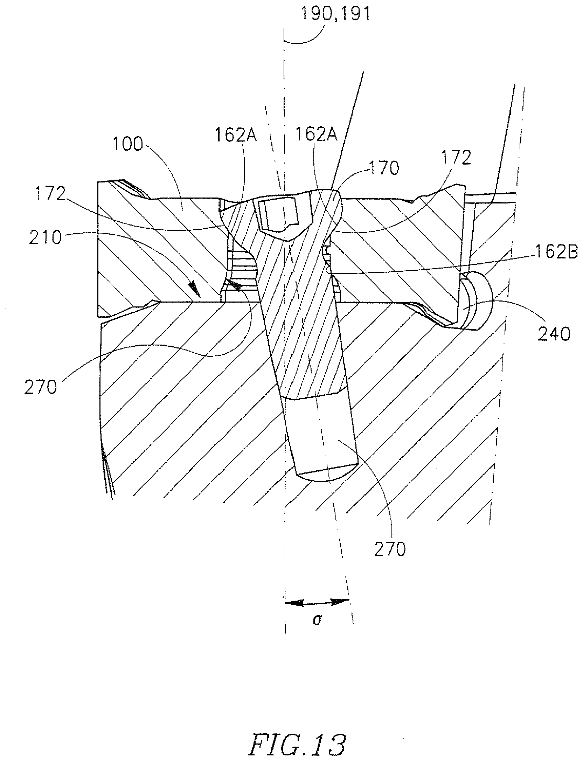

As seen in Figs. 12 and 13, the clamping bore 270 may be inclined at a predetermined non-zero angle σ relative to a normal 190 (perpendicular) to the pocket base 210, the normal 190 being coincident with a central axis 191 of the through bore 160. Inclining the clamping screw 170 such that the resultant direction of the clamping action is towards the far corner 240 of the pocket 208 may provide better retention and less chatter of cutting insert 100 during cutting operations. When the clamping screw 170 is inclined in such a manner, its clamping surfaces 172 abut contact surfaces belonging to both sets (162A and 162B) present on the side wall 164 of the cutting insert's through bore 160. It is understood therefore, that by virtue of these contact surfaces, a given cutting insert may selectively be secured to a pocket base having an inclined through bore, or to a pocket base having a perpendicular through bore. Each set of contact surfaces 162A, 162B intersects separate planes P1, P2 that are spaced-apart from one another on either side of the median plane M. Abutting the contact surfaces associated with only one plane P1 or P2 may cause swiveling of the clamping screw 170, but abutting the contact surfaces associated with two planes P1 and P2 reduces this likelihood. Furthermore, abutting the contact surfaces on a single plane may result in over-constrained seating of the clamping screw 170 since only the highest points will abut. On the other hand, abutting contact surfaces belonging to separate planes does not suffer from this. Thus,, the contact surfaces of the first set 162A and the second set 162B are configured relative to one another such that a clamping screw 170 inserted at a non-zero angle relative to a through bore axis 191 abuts at least one contact surface from each set.

## Claims

1. A double-ended indexable cutting insert (100) comprising:
first (102) and second (104) substantially square end surfaces facing opposite directions, each end surface having an associated abutment surface (108) and four associated insert corners (106);
four side surfaces (112A, 112B, 112C, 112D) connecting the first and second end surfaces to form a total of eight cutting edges, each cutting edge comprising a primary cutting edge (120), a wiper (122) and a transitive edge (124) connecting the primary cutting edge to the wiper, at least the primary cutting edge and the wiper occupying a common plane;
a median plane (M) located mid-way between the first and second end surfaces and passing through the four side surfaces;
wherein:
each insert corner has associated therewith:
a primary cutting edge extending from said each insert corner in a downward direction towards the median plane; and
**characterised in that** each insert corner has associated therewith:
a wiper extending from said each insert corner in an upward direction away from the median plane, said wiper rising above an associated abutment surface.

2. The cutting insert according to claim 1, wherein a leading portion (121) of the primary cutting edge which is closest to the insert corner, is above said associated abutment surface.

3. The cutting insert according to claim 1, wherein, in a side view of the cutting insert:
the primary cutting edge slopes from a first insert corner towards the median plane (M) and forms an angle α therewith;
the wiper slopes from a second insert corner away from the median plane (M) and forms an angle β therewith, α ≠ β.

4. The cutting insert according to claim 3, wherein α ≥ β.

5. The cutting insert according to claim 4, wherein α is between 6° and 12°, and P is between 0° and 6°.

6. The cutting insert according to claim 1, wherein each end surface comprises a peripheral groove (150) fully encircling the abutment surface, the peripheral groove having an outer portion (152) which slopes downwardly from a nearest edge, and an inner portion (156) which rises towards the abutment surface (108).

7. The cutting insert according to claim 1, wherein the abutment surface (108) comprises a plurality of projecting abutment pads (130).

8. The cutting insert according to claim 7, wherein at least a leading portion (121) of the primary cutting edges (120) and the wipers (122) are above the projecting abutment pads (130).

9. The cutting insert according to claim 8, wherein:
the projecting abutment pads (130) are at a height H1 above the median plane (M);
a high point (123) of the wipers (122) is at a height H2 above the projecting abutment pads (130); and
a ratio of H2/H1 is between 0.25 - 0.5.

10. The cutting insert according to claim 1, wherein, in a side view of the cutting insert:
the primary cutting edge (120) extends from its associated insert corner (106') and along its associated side surface (112) sufficiently far to provide a depth of cut of L1, which is between 0.5 - 0.7 times the length L of its associated side surface (112); and
the wiper (122) extends from its associated insert comer (106") and along its associated side surface (112) for a distance of L2, which is between 0.1 - 0.2 times the length L of its associated side surface (112).

11. The cutting insert according to claim 1, further comprising a throughbore (160) passing between the first and second end surfaces and through the median plane.

12. The cutting insert according to claim 11, wherein a sidewall (164) of the throughbore (160) is provided with a plurality of sets of contact surfaces, the contact surfaces of a first set (162A) intersecting a first plane (P1) and the contact surfaces (162B) of a second set intersecting a second plane (P2) which is spaced apart from the first plane (P1), the first and second planes both being parallel to the median plane (M), and located on opposite sides of the median plane (M).

13. The cutting insert according to claim 12, wherein:
the contact surfaces of the first set (162A) and the second set (162B) are configured relative to one another such that a clamping screw (170) inserted at a non-zero angle relative to a through bore axis (191) abuts at least one contact surface from each set.

14. The cutting insert according to claim 1, wherein:
the median plane (M) passes substantially perpendicularly through the four side surfaces (112A, 112B, 112C, 112D).

15. A milling cutter (200) having an axis of rotation R and comprising:
a cutter body (202) having a front face (204) connecting to a peripheral surface (206) and at least one insert pocket (208) opening out to both the front face and the peripheral surface; and
a double-ended indexable cutting insert (100) according to any one of the preceding claims seated in the at least one insert pocket.

16. The milling cutter according to claim 15, wherein the cutting insert is seated such that:
the cutting insert has an overall negative axial relief angle (δ) for providing axial clearance and an overall negative radial relief angle (λ) for providing radial clearance.

17. The milling cutter according to claim 15, wherein:
an operative primary cutting edge has a positive axial angle (γ); and
an operative wiper has a negative radial angle (θ).

18. The milling cutter according to claim 15, wherein:
the insert pocket (208) has a pocket base (210) which slopes downwardly in the axial direction towards the front face, and slopes downwardly in the radial direction towards the peripheral surface.

19. The milling cutter according to claim 15, wherein:
the insert pocket (208) comprises spaced apart first (222) and second (224) radial abutment surfaces and an axial abutment surface (226) which together provide three-point contact with adjacent non-operative sides of the cutting insert.

20. The milling cutter according to claim 15, wherein:
the insert pocket (208) has a pocket base (210) provided with a clamping bore (270) which is inclined at a predetermined non-zero angle (σ) relative to a normal to the pocket base 210; and
a clamping screw (170) passing through a through bore (160) of the cutting insert (100) and occupying the clamping bore (270) applies a clamping force at least partially in a direction of a far comer (240) of the insert pocket (208).

21. The milling cutter according to claim 15, wherein:
the cutting insert (100) is seated in the at least one insert pocket (208) such that an operative primary cutting edge (120) and an operative wiper (122) are arranged to cut a true 90° shoulder in a work piece, while still providing clearance for a non-operative primary cutting edge (120) lying on the same plane as the operative wiper (122).

## Patentansprüche

1. Zweiseitiger Wendeschneideinsatz (100), der aufweist:
eine erste (102) und eine zweite (104) im Wesentlichen quadratische Endfläche, die in Gegenrichtungen weisen, wobei jede Endfläche eine zugeordnete Anlagefläche (108) und vier zugeordnete Einsatzecken (106) hat;
vier Seitenflächen (112A, 112B, 112C, 112D), die die erste und zweite Endfläche verbinden, um insgesamt acht Schneidkanten zu bilden, wobei jede Schneidkante eine Primärschneidkante (120), einen Abstreifer (122) und eine Übergangskante (124) aufweist, die die Primärschneidkante mit dem Abstreifer verbindet und mindestens die Primärschneidkante und der Abstreifer eine gemeinsame Ebene belegen;
eine Medianebene (M), die auf halbem Weg zwischen der ersten und zweiten Endfläche liegt und die vier Seitenflächen durchläuft;
wobei:
jede Einsatzecke in Zuordnung zu ihr aufweist:
eine Primärschneidkante, die sich von jeder Einsatzecke in Abwärtsrichtung zur Medianebene erstreckt; und
**dadurch gekennzeichnet, dass** jede Einsatzecke in Zuordnung zu ihr aufweist:
einen Abstreifer, der sich von jeder Einsatzecke in Aufwärtsrichtung weg von der Medianebene erstreckt, wobei der Abstreifer über eine zugeordnete Anlagefläche ansteigt.

2. Schneideinsatz nach Anspruch 1, wobei ein voreilender Abschnitt (121) der Primärschneidkante, der am nächsten zur Einsatzecke gelegen ist, über der zugeordneten Anlagefläche liegt.

3. Schneideinsatz nach Anspruch 1, wobei in Seitenansicht des Schneideinsatzes:
sich die Primärschneidkante von einer ersten Einsatzecke zur Medianebene (M) neigt und einen Winkel α damit bildet;
sich der Abstreifer von einer zweiten Einsatzecke weg von der Medianebene (M) neigt und einen Winkel β damit bildet, wobei α ≠ β.

4. Schneideinsatz nach Anspruch 3, wobei α ≥ β.

5. Schneideinsatz nach Anspruch 4, wobei α zwischen 6° und 12° liegt und β zwischen 0° und 6° liegt.

6. Schneideinsatz nach Anspruch 1, wobei jede Endfläche eine Umfangsnut (150) aufweist, die die Anlagefläche vollständig umschließt, wobei die Umfangsnut einen Außenabschnitt (152), der von einer nächstgelegenen Kante nach unten abfällt, und einen Innenabschnitt (156) hat, der zur Anlagefläche (108) ansteigt.

7. Schneideinsatz nach Anspruch 1, wobei die Anlagefläche (108) mehrere vorstehende Anlageblöcke (130) aufweist.

8. Schneideinsatz nach Anspruch 7, wobei mindestens ein voreilender Abschnitt (121) der Primärschneidkanten (120) und der Abstreifer (122) über den vorstehenden Anlageblöcken (130) liegt.

9. Schneideinsatz nach Anspruch 8, wobei:
die vorstehenden Anlageblöcke (130) eine Höhe H1 über der Medianebene (M) haben;
ein Hochpunkt (123) der Abstreifer (122) eine Höhe H2 über den vorstehenden Anlageblöcken (130) hat; und
ein Verhältnis H2/H1 zwischen 0,25 und 0,5 liegt.

10. Schneideinsatz nach Anspruch 1, wobei in Seitenansicht des Schneideinsatzes:
sich die Primärschneidkante (120) von ihrer zugeordneten Einsatzecke (106') und entlang ihrer zugeordneten Seitenfläche (112) ausreichend weit erstreckt, um für eine Schnitttiefe L1 zu sorgen, die zwischen dem 0,5- und 0,7-fachen der Länge L ihrer zugeordneten Seitenfläche (112) liegt; und
sich der Abstreifer (122) von seiner zugeordneten Einsatzecke (106") und entlang seiner zugeordneten Seitenfläche (112) über eine Entfernung L2 erstreckt, die zwischen dem 0,1- und 0,2-fachen der Länge L seiner zugeordneten Seitenfläche (112) liegt.

11. Schneideinsatz nach Anspruch 1, der ferner eine Durchgangsbohrung (160) aufweist, die zwischen der ersten und zweiten Endfläche und durch die Medianebene durchläuft.

12. Schneideinsatz nach Anspruch 11, wobei eine Seitenwand (164) der Durchgangsbohrung (160) mit mehreren Sätzen von Kontaktflächen versehen ist, wobei die Kontaktflächen eines ersten Satzes (162A) eine erste Ebene (P1) schneiden und die Kontaktflächen (162B) eines zweiten Satzes eine zweite Ebene (P2) schneiden, die von
der ersten Ebene (P1) beabstandet ist, und die erste und zweite Ebene beide parallel zur Medianebene (M) sind und auf Gegenseiten der Medianebene (M) liegen.

13. Schneideinsatz nach Anspruch 12, wobei:
die Kontaktflächen des ersten Satzes (162A) und des zweiten Satzes (162B) relativ zueinander so konfiguriert sind, dass eine Klemmschraube (170), die in einem Winkel ungleich null relativ zu einer Durchgangsbohrungsachse (191) eingesetzt ist, an mindestens einer Kontaktfläche aus jedem Satz anliegt.

14. Schneideinsatz nach Anspruch 1, wobei:
die Medianebene (M) die vier Seitenflächen (112A, 112B, 112C, 112D) im Wesentlichen senkrecht durchläuft.

15. Fräser (200), der eine Rotationsachse R hat und aufweist:
einen Fräserkörper (202) mit einer Vorderfläche (204), die mit einer Umfangsfläche (206) verbunden ist, und mindestens einer Einsatztasche (208), die sowohl zur Vorderfläche als auch zur Umfangsfläche mündet; und
einen zweiseitigen Wendeschneideinsatz (100) nach einem der vorstehenden Ansprüche, der in der mindestens einen Einsatztasche sitzt.

16. Fräser nach Anspruch 15, wobei der Schneideinsatz so sitzt, dass:
der Schneideinsatz einen negativen axialen Gesamtfreiwinkel (δ) zum Bilden eines axialen Freiraums und einen negativen radialen Gesamtfreiwinkel (λ) zum Bilden eines radialen Freiraums hat.

17. Fräser nach Anspruch 15, wobei:
eine wirkende Primärschneidkante einen positiven Axialwinkel (γ) hat; und
ein wirkender Abstreifer einen negativen Radialwinkel (θ) hat.

18. Fräser nach Anspruch 15, wobei:
die Einsatztasche (208) eine Taschenbasis (210) hat, die in Axialrichtung zur Vorderfläche nach unten abfällt und in Radialrichtung zur Umfangsfläche nach unten abfällt.

19. Fräser nach Anspruch 15, wobei:
die Einsatztasche (208) eine erste (222) und eine davon beabstandete zweite (224) Radialanlagefläche sowie eine Axialanlagefläche (226) aufweist, die gemeinsam für einen Dreipunktkontakt mit benachbarten nicht wirkenden Seiten des Schneideinsatzes sorgen.

20. Fräser nach Anspruch 15, wobei:
die Einsatztasche (208) eine Taschenbasis (210) hat, die mit einer Klemmbohrung (270) versehen ist, die in einem vorbestimmten Winkel (σ) ungleich null relativ zu einer Normalen zur Taschenbasis (210) geneigt ist; und
eine Klemmschraube (170), die eine Durchgangsbohrung (160) des Schneideinsatzes (100) durchläuft und die Klemmbohrung (270) belegt, eine Klemmkraft mindestens teilweise in Richtung einer entfernten Ecke (240) der Einsatztasche (208) ausübt.

21. Fräser nach Anspruch 15, wobei:
der Schneideinsatz (100) in der mindestens einen Einsatztasche (208) so sitzt, dass eine wirkende Primärschneidkante (120) und ein wirkender Abstreifer (122) angeordnet sind, um eine maßgenaue 90°-Schulter in einem Werkstück zu fräsen, während dennoch für Freiraum für eine nicht wirkende Primärschneidkante (120) gesorgt ist, die auf derselben Ebene wie der wirkende Abstreifer (122) liegt.

## Revendications

1. Plaquette de coupe à indexation à deux extrémités (100) comprenant :
des première (102) et seconde (104) surfaces d'extrémité sensiblement carrées orientées dans des directions opposées, chaque surface d'extrémité ayant une surface de butée associée (108) et quatre coins de plaquette associés (106) ;
quatre surfaces latérales (112A, 112B, 112C, 112D) reliant les première et seconde surfaces d'extrémité pour former un total de huit bords de coupe, chaque bord de coupe comprenant un bord de coupe primaire (120), un racleur (122) et un bord transitif (124) reliant le bord de coupe primaire au racleur, au moins le bord de coupe primaire et le racleur occupant un plan commun ;
un plan médian (M) situé à mi-chemin entre les première et seconde surfaces d'extrémité et passant à travers les quatre surfaces latérales ;
dans laquelle :
à chaque coin de plaquette est associé :
un bord de coupe primaire s'étendant à partir de chacun desdits coins de plaquette vers le bas en direction du plan médian ; et
**caractérisé en ce qu'**à chaque coin de plaquette est associé :
un racleur s'étendant à partir de chacun desdits coins de plaquette vers le haut à l'écart du plan médian, ledit racleur s'élevant au-dessus d'une surface de butée associée.

2. Plaquette de coupe selon la revendication 1, dans laquelle une partie d'attaque (121) du bord de coupe primaire qui est la plus proche du coin de plaquette, se trouve au-dessus de ladite surface de butée associée.

3. Plaquette de coupe selon la revendication 1, dans laquelle, dans une vue de côté de la plaquette de coupe :
le bord de coupe primaire s'incline en partant d'un premier coin de plaquette vers le plan médian (M) et forme un angle α avec celui-ci ;
le racleur s'incline en partant d'un second coin de plaquette à l'écart du plan médian (M) et forme un angle β avec celui-ci, α ≠ β.

4. Plaquette de coupe selon la revendication 3, dans laquelle α ≥ β.

5. Plaquette de coupe selon la revendication 4, dans laquelle α est entre 6° et 12° et β est entre 0° et 6°.

6. Plaquette de coupe selon la revendication 1, dans laquelle chaque surface d'extrémité comprend une rainure périphérique (150) qui encercle entièrement la surface de butée, la rainure périphérique comportant une partie externe (152) qui s'incline vers le bas à partir du bord le plus proche, et une partie interne (156) qui s'élève vers la surface de butée (108).

7. Plaquette de coupe selon la revendication 1, dans laquelle la surface de butée (108) comprend une pluralité de plots de butée en saillie (130).

8. Plaquette de coupe selon la revendication 7, dans laquelle au moins une partie d'attaque (121) des bords de coupe primaires (120) et des racleurs (122) se trouve au-dessus des plots de butée en saillie (130).

9. Plaquette de coupe selon la revendication 8, dans laquelle :
les plots de butée en saillie (130) se trouvent à une hauteur H1 au-dessus du plan médian (M) ;
un point haut (123) des racleurs (122) se trouve à une hauteur H2 au-dessus des plots de butée en saillie (130) ; et
le rapport de H2/H1 se situe entre 0,25 et 0,5.

10. Plaquette de coupe selon la revendication 1, dans laquelle, dans une vue de côté de la plaquette de coupe :
le bord de coupe primaire (120) s'étend à partir de son coin de plaquette associé (106') et le long de sa surface latérale associée (112) sur une distance suffisante pour fournir une profondeur de coupe de L1, qui représente entre 0,5 et 0,7 fois la longueur L de sa surface latérale associée (112) ; et
le racleur (122) s'étend à partir de son coin de plaquette associé (106") et le long de sa surface latérale associée (112) sur une distance de L2, qui représente entre 0,1 et 0,2 fois la longueur L de sa surface latérale associée (112).

11. Plaquette de coupe selon la revendication 1, comprenant en outre un alésage traversant (160) qui passe entre les première et seconde surfaces d'extrémité et à travers le plan médian.

12. Plaquette de coupe selon la revendication 11, dans laquelle une paroi latérale (164) de l'alésage traversant (160) est pourvue d'une pluralité d'ensembles de surfaces de contact, les surfaces de contact d'un premier ensemble (162A) coupant un premier plan (P1) et les surfaces de contact (162B) d'un second ensemble coupant un second plan (P2) qui est espacé par rapport au premier plan (P1), les premier et second plans étant tous deux parallèles au plan médian (M), et situés de part et d'autre du plan médian (M).

13. Plaquette de coupe selon la revendication 12, dans laquelle :
les surfaces de contact du premier ensemble (162A) et du second ensemble (162B) sont configurées les unes par rapport aux autres de telle sorte qu'une vis de serrage (170) introduite selon un angle non nul par rapport à l'axe de l'alésage traversant (191) vient en butée sur au moins une surface de contact de chaque ensemble.

14. Plaquette de coupe selon la revendication 1, dans laquelle :
le plan médian (M) passe de façon sensiblement perpendiculaire à travers les quatre surfaces latérales (112A, 112B, 112C, 112D).

15. Fraise (200) ayant un axe de rotation R et comprenant :
un corps de fraise (202) ayant une face avant (204) reliée à une surface périphérique (206) et au moins une poche à plaquette (208) ouvrant à la fois sur la face avant et sur la surface périphérique ; et
une plaquette de coupe à indexation à deux extrémités (100) selon l'une quelconque des revendications précédentes logée dans l'au moins une poche à plaquette.

16. Fraise selon la revendication 15, dans laquelle la plaquette de coupe est logée de telle sorte que :
la plaquette de coupe présente un angle de découpe axial globalement négatif (δ) pour fournir un jeu axial et un angle de découpe radial globalement négatif (λ) pour fournir un jeu radial.

17. Fraise selon la revendication 15, dans laquelle :
un bord de coupe primaire opérationnel présente un angle axial positif (γ) ; et
un racleur opérationnel présente un angle radial négatif(θ).

18. Fraise selon la revendication 15, dans laquelle :
la poche à plaquette (208) possède une base de poche (210) qui s'incline vers le bas dans la direction axiale vers la face avant, et s'incline vers le bas dans la direction radiale vers la surface périphérique.

19. Fraise selon la revendication 15, dans laquelle :
la poche à plaquette (208) comprend des première (222) et seconde (224) surfaces de butée radiales espacées l'une par rapport à l'autre et une surface de butée axiale (226) qui fournissent ensemble un contact à trois points avec les côtés non opérationnels adjacents de la plaquette de coupe.

20. Fraise selon la revendication 15, dans laquelle :
la poche à plaquette (208) possède une base de poche (210) pourvue d'un alésage de serrage (270) qui est incliné selon un angle non nul prédéterminé (σ) par rapport à la normale à la base de poche (210) ; et
une vis de serrage (170) passant à travers un alésage traversant (160) de la plaquette de coupe (100) et occupant l'alésage de serrage (270) applique une force de serrage au moins partiellement en direction d'un coin distant (240) de la poche à plaquette (208).

21. Fraise selon la revendication 15, dans laquelle :
la plaquette de coupe (100) est logée dans l'au moins un poche à plaquette (208) de telle sorte qu'un bord de coupe primaire opérationnel (120) et un racleur opérationnel (122) sont agencés de manière à tailler un épaulement d'exactement 90° dans une pièce, tout en ménageant néanmoins un jeu pour un bord de coupe primaire non opérationnel (120) se trouvant dans le même plan que le racleur opérationnel (122).
